# EUROPÄISCHE PATENTSCHRIFT

(11) **EP 1 064 520 B1**
(45) Veröffentlichungstag und Bekanntmachung des Hinweises auf die Patenterteilung: **11.06.2003**
(21) Anmeldenummer: 99910354.2
(22) Anmeldetag: 17.03.1999
(51) Int. Cl.: G01C 19/56, B62D 6/00

(54) **DREHRATENSENSORSYSTEM**
SYSTEM FOR DETECTING A YAW RATE
SYSTEME CAPTEUR D'ANGLE DE LACET

(30) Priorität: 18.03.1998 DE 19811547
(43) Veröffentlichungstag der Anmeldung: 03.01.2001
(73) Patentinhaber: Continental Teves AG & Co. oHG, 60488 Frankfurt am Main (DE)
(72) Erfinder: LOHBERG, Peter, D-61381 Friedrichsdorf (DE); BURGDORF, Jochen, D-63075 Offenbach (DE); BURGHARDT, Roland, D-60439 Frankfurt am Main (DE); LORECK, Heinz, D-65510 Idstein (DE)
(86) Internationale Anmeldenummer: EP9901758
(87) Internationale Veröffentlichungsnummer: WO99047889

(56) Entgegenhaltungen:
- EP-A- 0 642 216
- DE-A- 19 621 320

## Beschreibung

Die Erfindung betrifft ein System zur Beeinflussung des Fahrverhaltens eines Kraftfahrzeugs.

Systeme zum Regeln oder Steuern unterschiedlicher fahrzeugdynamischer Größen eines Kraftfahrzeugs werden immer komplexer, da zunehmend neue Funktionen im Kraftfahrzeug implementiert werden. Bekannt sind Systeme zur Bremsregelung und/oder Steuerung (ABS), Systeme zur Antriebsschlupfregelung (ASR), Systeme zur Lenkungssteuerung und/oder -regelung, Systeme zur Fahrwerksregelung bzw. -steuerung, Systeme zur Fahrdynamikregelung und Systeme zum Motormanagement.

Solchen Systemen ist gemein, daß sie Informationen über die Bewegung des Fahrzeugs relativ zur Straße benötigen. Erforderlich ist hierbei vor allem die Messung der Fahrzeuglängsbewegung, der Fahrzeugquerbewegung und der Fahrzeuggierbewegung mit geeigneten Sensoren.

Drehraten- oder Gierratensensoren, die die Coriolis-Kraft ausnutzen, werden zur Bestimmung der Bewegung um die Hochachse des Fahrzeugs eingesetzt. Allgemein besitzen solche Sensoren eine bewegliche mechanische Struktur, welche einen zu einer periodischen Schwingung angeregten elektrisch-mechanischen Wandler aufweist. Erfährt der Sensor eine Drehung um eine Achse senkrecht zur angeregten Schwingung, so führt die Bewegung der Schwingung zu einer Coriolis-Kraft, die proportional zur Meßgröße, das heißt der Winkelgeschwindigkeit, ist. Durch die Coriolis-Kraft wird eine zweite zur angeregten Schwingung orthogonale Schwingung in einem mechanisch-elektrischen Wandler angeregt. Diese zweite Schwingung kann durch verschiedene Meßverfahren erfaßt werden, wobei die erfaßte Größe als Maß für die auf den Drehratensensor wirkende Drehrate dient.

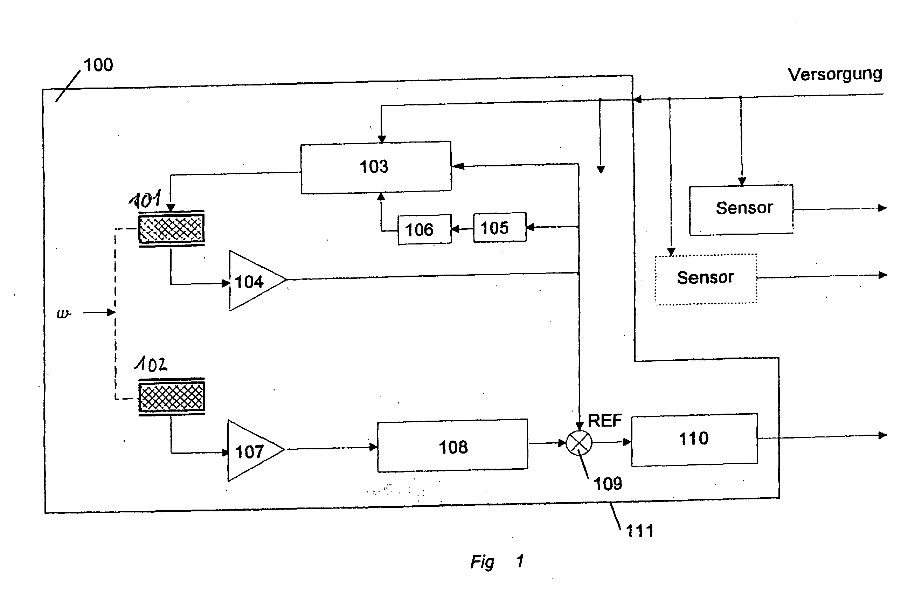

Ein bekannter Drehratensensor 100 ist in Fig. 1 dargestellt. Der hier betrachtete Drehratensensor weist einen elektrisch-mechanischen Wandler 101 und einen mechanisch-elektrischen Wandler 102 auf, deren mechanische Struktur in Form einer Quarzstimmgabel ausgebildet ist. Der elektrisch-mechanische Wandler wird von einem Anregungsverstärker 103(Oszillator) zu einer Grundschwingung des Quarzes angeregt. Der durch den elektrisch-mechanischen Wandler fließende Strom wird über einen Strom-Spannungswandler 104 gemessen und zum Eingang des Anregungsverstärkers 103 zurückgeführt, der jeweils beim NullDurchgang, mit einer Hysterese, schaltet.

Die Empfindlichkeit des elektrisch-mechanischen Wandlers 101 ist von der mechanischen Schwingungsamplitude der Stimmgabel abhängig. Um eine definierte Empfindlichkeit des Drehratensensors zu haben, wird die Schwingungsamplitude gegenüber Temperatur- und Alterungseinflüssen stabilisiert. Dazu ist es nötig, die Schwingungsamplitude zu messen. Dies kann über zusätzliche Bauelemente oder über den Strom-Spannungswandler 104 erfolgen. Dessen Ausgangssignal liefert nach einer Vollweggleichrichtung 105 mit anschließender Filterung ein Gleichspannungssignal, das der Amplitude des elektrisch-mechanischen Wandlers 101 proportional ist. Die Bestimmung der Regelabweichung wird durch Integration eines Subtrahierers in den Vollweggleichrichters 105 realisiert.

Der eigentliche Regler ist als PI-Regler 106 ausgebildet, um möglichst kleine Regelabweichungen der Schwingungsamplitude zu erreichen.

Der elektrisch-mechanische Wandler 101 ist mit einem mechanisch-elektrischen Wandler 102 mechanisch fest verbunden. Er weist die gleiche Ausbildung wie der elektrisch-mechanische Wandler auf und besteht ebenfalls aus Quarz. Der mechanischelektrisch Wandler 102 liefert ein Signal mit der gleichen Schwingungsfrequenz wie der angeregte elektrisch-mechanische Wandler 101, seine Amplitude ist aber proportional von der Drehrate abhängig. Dabei handelt es sich um die durch die Drehrate amplitudenmodulierte Schwingung, mit zwei Seitenbändern und unterdrücktem Träger. Überlagert sind parasitäre Signale durch Unsymmetrien zwischen dem elektrisch-mechanischen Wandler und dem mechanisch-elektrischen Wandler und kapazitive Überkopplungen zwischen den Leitungen und Elektroden. Der stimmgabelförmige mechanisch-elektrische Wandler liefert eine Ladung als Signal, das in einem Signalaufnahmeverstärker 107 als erste Eingangsstufe vorverstärkt wird. Eine weitere Verstärkung des Signals in einem mehrstufigen Verstärker 108 erfolgt aufgrund der geringen Signalamplitude. In einem Synchrongleichrichter 109, der vom Anregungssignal angesteuert wird, wird aus dem modulierten Signal ein gleichgerichtetes Drehratensignal gebildet. Dies ist nötig, da die Amplitude des modulierten Signals den Betrag der Drehrate, die Phase das Vorzeichen enthält. Der Synchrongleichrichter stellt ein effektives Filter gegenüber Störsignalen mit verschobener Phase dar. Nach der Synchrongleichrichtung steht das gewünschte Drehratensignal zur Verfügung. In einer letzten Verstärkerstufe 110 werden unerwünschte höherfrequente Restsignale über einen Tiefpaß gedämpft und die Skalierung durch Verstärkung auf den geforderten Ausgangsspannungsbereich von ca. 5Volt eingestellt.

Derartige Dreh- bzw. Gierratensensoren sind vielfältig bekannt. Als mechanische Wandlerkörper (Vibrationskörper) finden Zylinder, Prismen, Stimmgabeln, mikromechanisch erzeugte Gebilde aus Silizium oder Quarz Anwendung. So vielfältig die Ausbildung der Wandlerkörper ist, so verschieden sind die den Wandlerkörpern im Sensorgehäuse 111 zugeordneten analogen Schaltungselemente, die entsprechend dem Wandlerkörper, dessen Werkstoff, der Anregungsfrequenz und dgl. abgestimmt sind (vgl. DE-A-196 21 320).

Der für Sensoren beispielhaft näher beschriebene Drehratensensor umfaßt daher analoge Untereinheiten mit fest definiertem Funktionsumfang: z. B. Anregung, Gleichrichtung, Verstärkung, Filter, etc. Das Ergebnis der Sensoren steht dann zur Weiterverarbeitung bereit an einer üblichen Schnittstelle, an welche eine Auswerteeinheit angeschlossen werden kann, die die Fahrdynamik des Fahrzeugverhaltens regelt.

Diese Hardwarefunktionen benötigen bisher ein verhältnismäßig großes Bauvolumen, und führen zu hohen Kosten. Darüber hinaus haben sie für den Anwender den Nachteil, daß dieser nicht oder nur mit sehr großem Aufwand Veränderungen an den analogen Hardwarefunktionen des Sensors vornehmen kann, was die Flexibilität beim Anwender stark einschränkt. Die Integration von Zusatzfunktionen, wie z. B. die Unterdrückung von Resonanzeigenschaften des Übertragungsverhaltens, entfällt. Hinzu kommt, daß die Stabilität der analogen Hardwarefunktionen nur mit hohem Kostenaufwand erzielt werden kann.

Bekannt ist es, wenigstens zwei Sensoren zur Erfassung von Fahrzeugbewegungen des Fahrzeugs eine Auswerteeinheit zum Auswerten der Signale der Sensoreinheiten zuzuordnen, wobei diese Auswerteeinheit mit den Sensoren räumlich zu einem Sensor-Modul zusammengefaßt sind. Die Sensoren sind an sich bekannte Längs- und/oder Querbeschleunigungssensoren und/oder handelsübliche Drehratensensoren. In der Auswerteeinheit werden vom Fahrzeug induzierte Störanteile gefiltert, Temperatureinflüsse kompensiert und die Sensorsignale auf einen beliebigen Punkt des Fahrzeugs transformiert.

EP-A-0 642 216 bezieht sich nicht auf ein KFZ-Regelungsystem, sondern auf ein Filterverfahren, mit Verwendung in Navigation von Flugzeugen, Schiffen oder Raketen.

Aufgabe der Erfindung ist es, ein System bereitzustellen, welches eine deutliche Flexibilisierung bezüglich der Signalaufbereitung ermöglicht und eine höhere Langzeitstabilität gewährleistet.

Dadurch, daß das System aus einer einen elektrisch-mechanischen Wandler und einen mechanisch-elektrischen Wandler mit Signalaufnahmeverstärker aufweisenden Sensor-Baueinheit, die unter Einfluß von Dreh- oder Gierbewegungen des Fahrzeugs seine elektrische Energieabgabe analog zu den Gierbewegungen verändert und die über einen Ausgang mit einem A/D-Signalwandler und über einen Eingang mit einem D/A-Signalwandler einer digitalen Signalverarbeitungseinheit verbunden ist und die über Signalverarbeitungseinheit einen Digitalausgang mit einer Schnittstelle zu einem Datenbus aufweist, besteht, ist die Schnittstelle und die konsequente Aufteilung der Funktionalität in eine rein sensorbezogene Sensor-Baueinheit und eine rein auswertebezogene Signalverarbeitungseinheit erreicht. Wesentliches Merkmal des erfindungsgemäßen Systems ist die den Wandlern zugehörigen minimal erforderlichen elektronischen Betriebsschaltungen bzw. analogen Schaltelemente. Die bei Drehratensensoren eingesetzten fein- oder mikromechanisch ausgebildeten Wandlerkörper, die unter Nutzung elektrophysikalischer Effekte aus Mikrobewegungen elektrische, sensorische Signale erzeugen oder umgekehrt auf elektrisch zugeführte Signalenergie mit Mikrobewegungen reagieren, erzeugen als Regelabweichung eine Ladung als Signal, weshalb die Sensor-Baueinheit als minimalstes zugeordnetes analoges Bauelement einen Signalverstärker als erste Eingangsstufe aufweist. Vorteilhaft weist die Sensor-Baueinheit darüber hinaus einen mit dem elektrisch-mechanischen Wandler verbundenen Anregungsverstärker auf, der die Schwingungsfrequenz des elektrisch-mechanischen Wandlers (Quarzkörpers) garantiert. Das System ist so dimensioniert, daß die Schwingungsbedingung bei der Resonanzfrequenz des elektrisch-mechanischen Wandlers erfüllt ist.

Ein Vorteil der Erfindung gegenüber dem Stand der Technik besteht darin, daß aufgrund der eingangs beschriebenen Aufteilung der Funktionaliät in eine sensor- und eine auswertebezogene Einheit oder Funktionsgruppe die Sensor-Baueinheit sehr einfach aufgebaut ist, weil alle für die Auswertung erforderlichen Komponenten auf die Signalverarbeitungseinheit ausgelagert sind. Daher kann die Sensor-Baueinheit zu der Anwendung kostengünstig bereitgestellt werden, was eine modulare Verwendung des Systems unterstützt. Es wird auch der Ersatz für neue Sensoren erheblich reduziert, weil nur noch die Sensor-Baueinheit ersetzt werden muß und die Signalverarbeitungseinheit entsprechend angepaßt werden kann.

Durch die Abtrennung der auswertebezogenen Funktionsgruppe wird eine Flexibilisierung in der Signalaufbereitung erreicht, mit der Toleranzen von Sensor-Baueinheiten in bezug auf die Anwendung kalibriert werden können.

Vorteilhaft ist das System zur Erfassung von Dreh- bzw. Gierbewegungen eines Kraftfahrzeugs vorgesehen. Es besteht im wesentlichen aus zwei separaten, mit elektrischer Energie betriebener Geräteeinheiten, wobei in der ersten Sensor-Baueinheit permanent elektrische Energie in analoge mechanische Bewegung und zugleich mechanische Bewegung in analoge elektrische Energie umgesetzt wird. In der zweiten Signalverarbeitungseinheit wird elektrische Energie ausschließlich in digitale Signalenergie gewandelt. Das elektrische Zusammenwirken beider Einheiten erfolgt über minimal drei Leitungsverbindungen, so daß die Signalverarbeitungseinheit nach funktionsspezifischen Algorithmen die Umsetzung der elektrischen Energie in mechanische Energie innerhalb der Sensor-Baueinheit beeinflußt und gleichzeitig die aus der mechanischen Energie erzeugte elektrische Energie in der Sensor-Baueinheit die funktionsspezifischen Algorithmen in der Signalverarbeitungseinheit beeinflussen. Dabei verändert die Sensor-Baueinheit unter dem Einfluß von Drehbzw.Gierbewegungen eines Fahrzeugs seine elektrische Energieabgabe analog zu den Gierbewegungen und die Signalverarbeitungseinheit erzeugt über Rechenoperationen zu diesen Gierbewegungen gehörige elektrisch codierte Zahlenwerte, kontrolliert dabei gleichzeitig über interne Vergleiche, deren Kausalität und Richtigkeit und wandelt danach die Zahlen in das Format für einen Datenbus, die einem Bus-Controller zugeführt werden, dessen elektrisches Netzwerk ebenfalls Bestandteil der Signalverarbeitungseinheit ist. Die Signalverarbeitungseinheit weist daher zusätzliche elektrische Anschlüsse auf, deren Anzahl den Erfordernissen des verwendeten Datenbusses entsprechen, und über die eine elektrische Leitungsverbindung zu einem Bustreiber hergestellt werden kann. Nach einer bevorzugten Ausbildung überschreitet der Arbeitsbereich der Sensor-Baueinheit am Signalausgang des die Gierbewegung des Fahrzeugs repräsentierenden Signals 2 Volt, vorzugsweise 1 Volt nicht. Dabei ist die in der Sensor-Baueinheit befindliche elektronische Schaltung auf ein derartiges Minimum begrenzt, das gerade erforderlich ist, um den Bereich der durch die Gierbewegung veränderten elektrischen Energieabgabe auf ein Promille bei einem Signal/Rausch/Verhältnis von 1:1 aufzulösen.

Vorteilhaft regt die Signalverarbeitungseinheit den elektrisch-mechanischen Wandler mit einem Anregungssignal mit einer Frequenz von 1 KHz bis 50 KHz so an, daß der Wandler mit konstanter Amplitude schwingt. Dabei wird im Zusammenwirken der Sensor-Baueinheit mit der Signalverarbeitungseinheit durch die Signalverarbeitungseinheit die Sensor-Baueinheit so beeinflußt, daß die Umsetzung der elektrischen in die mechanische Energie mit vorzugsweise hoher Frequenzfolge aber gleicher Intensität geschieht und die Sensor-Baueinheit mit gleich hoher Frequenzfolge aber einer mit der Gierbewegung veränderlichen Intensität in der Signalverarbeitungseinheit einen Algorithmus beeinflußt, der die zeitlichen Intensitätswerte miteinander multipliziert und zur Unterdrückung der numerischen Auswirkungen der hohen Frequenzfolge die Ergebnisse rechnerisch nach einer digitalen Filterfunktion, wie Tiefpaßfunktion, gewichtet. Dabei filtert die Tiefpaßfunktion die Frequenzen des Anregungssignales, das heißt, der Algorithmus unterdrückt Zahlenwerte mit einer Tiefpaßdämpfung von minimal 20 dB/Dekade, wenn die durch die Gierbewegung verursachte Intensität sich schneller als 30 Hz verändert.

Die Signalverarbeitungseinheit filtert über eine weitere Filterfunktion Resonanzfrequenzen der digitalen Größe zwischen 50 und 600 Hz, das heißt, daß der Algorithmus Zahlenwerte der veränderlichen Intensität mit minimal 60 dB unterdrückt, die durch die Gierbewegung im Frequenzbereich zwischen 50 bis 600 Hz verursacht wurden. Vorzugsweise bildet die Sensor-Baueinheit mit der Signalverarbeitungseinheit einen Drehraten- bzw. Gierratensensor, der nach Maßgabe einer Gierbewegung ein verändertes analoges Signal in die Signalverarbeitungseinheit eingibt, die digitale Werte für den Gierwinkel und/oder die Gierwinkelgeschwindigkeit und/oder die Gierwinkelbeschleunigung und/oder die erste Ableitung der Gierwinkelbeschleunigung über den Datenbus einer Weiterverarbeitungseinheit zur Verfügung stellt. Als bevorzugte Signalverarbeitungseinheit ist ein digitaler Signalprozessor vom Typ TMS 320 C24X (Texas Instruments) vorgesehen.
Ein Ausführungsbeispiel der Erfindung ist in der Zeichnung dargestellt und wird im folgenden näher beschrieben.

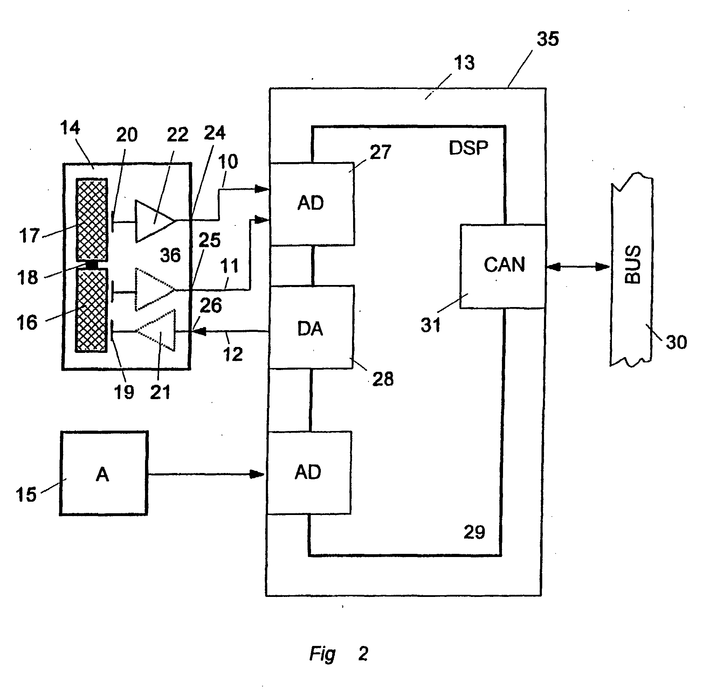

In der Fig. 2 ist die Sensor-Baueinheit 14 durch mindestens drei Leitungen 10,11,12 mit der Signalverarbeitungseinheit 13 verbunden. In der Sensorbaueinheit 14 sind zwei fein- oder mikromechanisch ausgebildete Wandlerkörper 16,17, die bei 18 mechanisch miteinander verbunden sind. Die Wandlerkörper 16,17 sind an ihren äußeren Enden gabelförmig ausgebildet und bilden eine für die Erfassung der Gierbewegung eines Fahrzeugs vorgesehene Quarzstimmgabel. Bei dem gabelförmigen Wandlerkörper 16 wird durch Auftreten elektrischer Wechselladungen über Elektroden 19 die Gabelzinken zum Oszillieren in die eine Raumrichtung angeregt, während gleichzeitig in einer anderen Raumrichtung über Elektroden 20 elektrische Wechselladungen abgegriffen werden, die unter Einfluß der Coriolis-Kraft entstehen. Der Anregungsverstärker 21 (Komperator) zum Oszillieren der Zinkenbewegung und der Signalaufnahmeverstärker 22 zum Abgriff der erzeugten Ladungen infolge Coriolis-Kraft bilden mit dem elektrodenbesetzten elektrisch-mechanischen Wandler 16 und dem elektrodenbesetzten mechanisch-elektrischen Wandler 17 die Sensor-Baueinheit 14. Die Sensor-Baueinheit 14 ist in einem Gehäuse 23 angeordnet, welches mindestens drei Leitungsanschlüsse 24,25,26 aufweist. Der mechanisch-elektrische Wandler 17 ist über den Ausgang 24 und der elektrisch-mechanische Wandler über den Eingang 26 mit der Signalverarbeitungseinheit 13 verbunden, die über einen A/D-Signalwandler 27 das analoge Ausgangssignal digitalisiert und über einen D/A-Wandler 28 das digitale Ausgangssignal in ein analoges Eingangssignal wandelt. Über Rückkoppelleitung 11 ist der elektrisch-mechanische Wandler mit dem A/D-Wandler 27 der digitalen Signalverarbeitungseinheit verbunden. Nach einer vorteilhaften Ausbildungsvariante ist in der Sensor-Baueinheit 14 ein weiterer Signalaufnahmeverstärker 36 vorgesehen, der das Rückkoppelsignal auf ein analog-digital umwandelbares Signal verstärkt. Die in einem Gehäuse 35 angeordnete Signalverarbeitungseinheit 13 weist ein Rechenwerk und einen Speicher auf und ist bevorzugt als digitaler Signalprozessor (DSP) ausgebildet. Die Ausbildung der Signalverarbeitungseinheit 13 als Mikrocontroller oder programmierbarer Logikbaustein ist ebenfalls möglich.

In den digitalen Signalprozessor 29 werden die nun digital vorliegenden Signale in noch zu beschreibender Weise digital verarbeitet. Ausgangsseitig des digitalen Signalprozessors 29 liegen die auswertebezogenen Sensorsignale an. Diese werden dem seriellen Bus-System 30 über den in dem digitalen Signalprozessor ausgebildeten CAN-Controller 31 eingespeist. Der digitale Signalprozessor mit integriertem CAN (Controller Aerea Network) übernimmt dabei folgende Systemfunktionen:

Bereitstellung eines Treibersignals/Treiberspannung zur Anregung des elektrisch-mechanischen Wandlers der Sensor-Baueinheit 14
Aufnahme der Signale des mechanisch-elektrischen Wandlers 17 mit spezifischen algorithmischen Verrechnungen und Filterung zur Gewinnung einer Zahlengröße für die Gierbewegung eines Fahrzeugs
Wandlung der Zahlengrößen der Gierbewegung eines Fahrzeugs im CAN und Transfer auf den seriellen Bus 30.

Das System arbeitet wie folgt:

Der elektrisch-mechanische Wandler wird über den Anregungsverstärker 21 (Komperator) von dem digitalen Signalprozessor über den D/A-Wandler 28 angesteuert. Der durch den elektrisch-mechanischen Wandler 16 fließende Strom wird vorzugsweise nach Verstärkung mit einem Signalaufnahmeverstärker 36 mittels A/D-Wandlung digitalisiert. Zur Bestimmung der Amplitude wird der Spitzenwert durch Suchen der Maxima und Minima und anschließender Differenzbildung in der Signalverarbeitungseinheit 13 berechnet. Das digitalisierte Ausgangssignal des A/D-Wandlers kann auch gebildet werden mit dem Effektivwert über die Wurzel der Summe aller quadrierten Werte. Weiterhin ist es möglich, den Abtastzeitpunkt der A/D-Wandlung mit der Anregungsschwingung (Oszillator-Schwingung) so zu synchronisieren, daß jeweils genau Maxima und Minima abgetastet werden, deren Differenz die Amplitude repräsentieren. Durch eine Subtraktion wird die Abweichung zum, dann digitalen Sollwert, gebildet. Dieser Wert dient als Eingang für eine proportional-integral-Regelung, oder einer anderen Regelung, die durch bekannte Algorithmen in dem digitalen Signalprozessor 29 berechnet werden. Der im digitalen Signalprozessor vorliegende Wert stellt dann die gewünschte Regelspannung dar, die über den D/A-Wandler an den Anregungsverstärker 21 gegeben wird. Dabei ist es vorteilhaft, den D/A-Wandler 28 durch eine Pulsweitenmodulation mit anschließender einfacher RC-Tiefpaßfilterung zu realisieren, um den Bauteileaufwand zu minimieren.

In Abhängigkeit von der Ausbildung des digitalen Signalprozessors 29 ist der Anregungsverstärker 21 (Komperator) durch eine Funktion innerhalb des digitalen Signalprozessors 29 gebildet. Der digitale Signalprozessor 29 bildet dann die Komperatorfunktion durch Algorithmen nach. Hierzu werden digitale Signalprozessoren eingesetzt, die hohe Daten- und Verarbeitungsraten gewährleisten, die die Genauigkeit der Schwingungsfrequenz des Quarzes garantieren. Diese Komperatorfunktion kann auch von einem Digitaleingang des digitalen Signalprozessors 29 gewährleistet werden. An den elektrisch-mechanischen Wandler 16 wird über die Elektroden 19 von der Signalverarbeitungseinheit 13 eine elektrische Wechselspannung A * sin (ωt) angelegt, die den Wandler zu mechanischen Vibrationen in eine erste Raumrichtung mit einer Frequenz von 1 KHz bis 50 KHz so angeregen, daß der Wandlerkörper 16 mit konstanter Amplitude schwingt. Bei einer Bewegung der Sensor-Baueinheit um die Dreh- bzw. Gierachse treten am mechanisch-elektrischen Wandler 17 unter dem Einfluß von Coriolis-Kräften zusätzliche Vibrationen in eine zweite Raumrichtung auf, deren Amplituden sich in Abhängigkeit von der Gierrate ändern.

Der mechanisch-elektrische Wandler 17 liefert ein Wechselspannungssignal B(GR)* sin (ωt) mit der gleichen Schwingfrequenz wie die Anregung, dessen Amplitude aber proportional von der Drehrate abhängt. Es handelt sich dabei um die durch die Drehrate amplitudenmodulierte Schwingung, mit zwei Seitenbändern und unterdrücktem Träger. Überlagert sind parasitäre Signale durch Unsymmetrien der Stimmgabel und kapazitive Überkopplungen zwischen den Leitungen und Elektroden. Die Quarzstimmgabel liefert eine Ladung als Signal, weshalb der Signalverstärker 22 erforderlich ist, da die Ladungssignale in der Regel so klein sind, um sie direkt digitalisieren zu können. Je nach Wandler kommen Ladungsverstärker, Strom-Spannungswandler oder andere zum Einsatz. Grundsätzlich soll das Signal so früh wie möglich digitalisiert werden. Der Arbeitsbereich der Sensor-Baueinheit sollte 2 Volt, vorzugsweise 1 Volt nicht überschreiten, wobei die mit den Wandlern 16,17 verbundene elektronische Schaltung auf ein derartiges Minimum begrenzt ist, das gerade erforderlich ist, um den Bereich der durch die Gierbewegung des Fahrzeugs veränderten elektrischen Energieabgabe auf ein Promille bei einem Signal-Rausch-Verhältnis von 1:1 aufzulösen. Vorzugsweise wird das Signal durch den Signalverstärker so hoch verstärkt, daß ein wirtschaftlicher 10 Bit-A/D-Wandler eingesetzt werden kann. Bei dem von dem mechanisch-elektrischen Wandler zur Verfügung gestellten Signal erfolgte eine Überabtastung mit einem wirtschaftlichen A/D-Wandler und anschließender digitaler Filterung im digitalen Signalprozessor 29 zur Quantisierungserhöhung. Selbstverständlich kann zur Verbesserung der Quantisierung auch eine Aufteilung der Bereiche und Quantisierung über verschiedene A/D-Kanäle oder eine Lupenfunktion bestimmter Bereiche ausgebildet werden.

Nachdem das Signal des mechanisch-elektrischen Wandlers 17 hinreichend genau digitalisiert wurde, erfolgt die Weiterverarbeitung vollständig digital in dem digitalen Signalprozessor 29. Für die Filterung des Rohsignals stehen alle Filteralgorithmen einer digitalen Signalverarbeitung zur Verfügung. Auch können besondere Filterungen, z. B. zur Unterdrückung von Resonanzerscheinungen, durchgeführt werden, die, analog realisiert, zu aufwendig wären. Vorteilhaft gibt die Signalverarbeitungseinheit 13 gezielt Signale zur Rückführung an die Sensor-Baueinheit 14 aus, die deren Verhalten verbessern.

Für die Synchrongleichrichtung oder Demodulation gibt es verschiedene Lösungswege. Zunächst wird der Synchrongleichrichter durch einen Algorithmus im digitalen Signalprozessor 29 nachgebildet. Selbstverständlich kann durch eine Multiplikation und anschließender Filterung eine Demodulation erreicht werden. Besonders vorteilhaft ist eine phasenrichtige Abtastung, da diese mit wenig Rechenaufwand verbunden ist. Der digitale Signalprozessor erlaubt aber aufgrund seiner Flexibilität auch andere, an spezielle Belange angepaßte, Lösungswege. Die abschließende Signalfilterung nach der Demodulation ist auch auf dem digitalen Signalprozessor durchführbar.

Vorteilhaft sind in der Signalverarbeitungseinheit Zusatzfunktionen integriert, wie Vorverarbeitung der Signale oder auch Überwachungsfunktionen. Da das Signal bereits digital vorliegt, ist die Übertragung über das Bus-System 30 mit geringem Aufwand möglich, die Auswertung der von der Sensor-Baueinheit 14 zur Verfügung gestellten Signale kann schnell an besondere Gegebenheiten angepaßt werden, um der Weiterentwicklung bei den Wandlern zu folgen. Die Erfindung bietet die Möglichkeit der Reduktion auf einen direkt am Sensorelement bzw. Wandler bzw. Abtastelement integrierten reduzierten Analogblock und einem Digitalblock, der aus wenigen Einzelbausteinen besteht.

## Patentansprüche

1. System zur Beeinflussung des Fahrverhaltens eines Kraftfahrzeugs, mit einer einen elektrisch-mechanischen Wandler (16) und einen mechanisch-elektrischen Wandler mit Signalaufnahmeverstärker (22) aufweisenden Sensor-Baueinheit (14), die unter dem Einfluß von Dreh- oder Gierbewegungen des Fahrzeugs seine elektrische Enegieabgabe analog zu den Gierbewegungen verändert und die über einen Ausgang mit einem A/D-Signalwandler (27) und über einen Eingang mit einem D/A-Signalwandler (28) einer digitalen Signalverarbeitungseinheit (13) verbunden ist und die Signalverarbeitungseinheit (13) einen Digitalausgang mit einer Schnittstelle zu einem Datenbus (30) aufweist.

2. System nach Anspruch 1, **dadurch gekennzeichnet, daß** der elektrisch-mechanische Wandler(16) in Resonanz betrieben wird.

3. System nach Anspruch 1 oder 2, **dadurch gekennzeichnet, daß** die Sensor-Baueinheit(14) einen dem elektrisch-mechanischen Wandler zugeordneten Anregungsverstärker(21) aufweist.

4. System nach einem der Ansprüche 1 bis 3, **dadurch gekennzeichnet, daß** der Arbeitsbereich der Sensor-Baueinheit(14) am Ausgang(24)2 Volt, vorzugsweise 1 Volt, nicht überschreitet.

5. System nach einem der Ansprüche 1 bis 4, **dadurch gekennzeichnet, daß** die Sensor-Baueinheit(14) und die Signalverarbeitungseinheit(13) jeweils in einem Gehäuse(23, 35) angeordnet sind und über mindestens drei Leitungen(10, 11, 12) verbunden sind.

6. System nach einem der Ansprüche 1 bis 5, **dadurch gekennzeichnet, daß** der Eingang des A/D-Signalwandlers über eine Signalleitung(10) mit dem Signalaufnahmeverstärker(22) des mechanisch-elektrischen Wandlers und der Ausgang des D/A-Signalwandlers über eine Steuerleitung(12) mit dem Anregungsverstärker(21) des elektrisch-mechanischen Wandlers verbunden sind, wobei über eine Rückkoppelleitung(11) der elektrisch-mechanische Wandler, vorzugsweise unter Zwischenschaltung eines Signalaufnahmeverstärkers (36), mit der digitalen Signalverarbeitungseinheit(13) verbunden ist.

7. System nach einem der Ansprüche 1 bis 6, **dadurch gekennzeichnet, daß** die Signalverarbeitungseinheit(13) ein Rechenwerk und einen Speicher aufweist.

8. System nach einem der Ansprüche 1 bis 7, **dadurch gekennzeichnet, daß** die Signalverarbeitungseinheit als Microcontroller, digitaler Signalprozessor (DSP) oder programmierbarer Logikbaustein ausgebildet ist.

9. System nach einem der Ansprüche 1 bis 8, **dadurch gekennzeichnet, daß** die Signalverarbeitungseinheit den elektrisch-mechanischen Wandler(16) mit einem Anregungssignal mit einer Frequenz von 1 kHz bis 50 KHz so anregt, daß der Wandler mit konstanter Amplitude schwingt.

10. System nach einem der Ansprüche 1 bis 9, **dadurch gekennzeichnet, daß** der elektrisch-mechanische Wandler(16) mit dem mechanisch-elektrischen Wandler(17) mechanisch verbunden ist, und daß bei einer auf die Einheit einwirkenden Drehbewegung ein Signal oder ein verändertes Signal am Eingang des A/D-Signalwandlers anliegt.

11. System nach einem der Ansprüche 1 bis 10, **dadurch gekennzeichnet, daß** die Sensor-Baueinheit(14) den Bereich des durch die Drehbewegung erzeugten oder veränderten Signales auf 1 Promille bei einem Signal/Rausch-Verhältnis von 1:1 auflöst.

12. System nach einem der Ansprüche 1 bis 11, **dadurch gekennzeichnet, daß** die digitale Signalverarbeitungseinheit(13) mindestens eine Filterfunktion und/oder eine Mischfunktion implementiert.

13. System nach einem der Ansprüche 1 bis 12, **dadurch gekennzeichnet, daß** der A/D-Wandler(27) das aus der Drehbewegung der Einheit resultierende Signal oder veränderte Signal der Signalverarbeitungseinheit als digitales Signal zur Verfügung stellt und in der Signalverarbeitungseinheit eine Multiplikation des Anregungssignals bzw. eines Rückkopplungssignales mit dem Signal bzw. veränderten Signal erfolgt.

14. System nach einem der Ansprüche 1 bis 13, **dadurch gekennzeichnet, daß** die Signalverarbeitungseinheit die aus der Multiplikation gewonnene Größe nach einer digitalen Filterfunktion, wie Tiefpaßfunktion, wichtet.

15. System nach Anspruch 14, **dadurch gekennzeichnet, daß** die Tiefpaßfunktion die Frequenzen des Anregungssignales filtert.

16. System nach einem der Ansprüche 1 bis 15, **dadurch gekennzeichnet, daß** die Signalverarbeitungseinheit über eine weitere Filterfunktion Resonanzfrequenzen der digitalen Größe zwischen 50 und 600 Herz filtert.

17. System nach einem der Ansprüche 1 bis 16, **gekennzeichnet durch** die Anordnung in einem Kraftfahrzeug.

18. System nach einem der Ansprüche 1 bis 17, **dadurch gekennzeichnet, daß** die Sensor-Baueinheit mit der Signalverarbeitungseinheit ein Gierratensensor ist, der nach Maßgabe einer Gierbewegung ein verändertes analoges Signal in die Signalverarbeitungseinheit eingibt, die digitale Werte für den Gierwinkel und/oder die Gierwinkelgeschwindigkeit und/oder die Gierwinkelbeschleunigung und/oder die erste Ableitung der Gierwinkelbeschleunigung über den Datenbus einer Weiterverarbeitungseinheit zur Verfügung stellt.

19. System nach einem der Ansprüche 1 bis 18, **dadurch gekennzeichnet, daß** der Signalverarbeitungseinheit weitere Sensor-Baueinheiten, z. B. zum Erfassen von Beschleunigungsgrößen, zugeordnet sind.

## Claims

1. A system for influencing the performance of a motor vehicle, comprising a sensor unit (14) with an electric-mechanical transducer (16) and a mechanical-electric transducer with signal recording amplifier (22), wherein said sensor unit (14) modifies its electric output of energy analogously to the yaw motion under the influence of the motion of rotation or yaw motion of the motor vehicle and is connected to an A/D signal converter (27) by way of an output and to a D/A signal converter (28) of a digital signal processing unit (13) by way of an input and the signal processing unit (13) exhibits a digital output with an interface to a data bus (30).

2. A system according to Claim 1, **characterized in that** the electric-mechanical transducer (16) is resonant.

3. A system according to Claim 1 or 2, **characterized in that** the sensor unit (14) includes an excitation amplifier (21) related to the electric-mechanical transducer.

4. A system according to one of the Claims 1 to 3,
**characterized in that** the working range of the sensor unit (14) does not exceed 2 Volt, preferably 1 Volt, at the output (24).

5. A system according to one of the Claims 1 to 4,
**characterized in that** the sensor unit (14) and the signal processing unit (13) are arranged in a housing (23, 35) respectively and connected by means of at least three lines (10, 11, 12).

6. A system according to one of the Claims 1 to 5, **characterized in that** the input of the A/D signal converter is connected to the signal recording amplifier (22) of the mechanical-electric transducer by way of signal line (10) and the output of the D/A signal converter is connected to the excitation amplifier (21) of the electric-mechanical transducer by way of a control line (12), wherein the electric-mechanical transducer is connected to the digital signal processing unit (13) by means of a feedback line (11), preferably with a signal recording amplifier (36) being connected in between.

7. A system according to one of the Claims 1 to 6, **characterized in that** the signal-processing unit (13) exhibits an arithmetical and logical unit as well as a memory.

8. A system according to one of the Claims 1 to 7, **characterized in that** the signal-processing unit is designed as a microcontroller, digital signal processor (DSP), or programmable logic module.

9. A system according to one of the Claims 1 to 8, **characterized in that** the signal processing unit excites the electric-mechanical transducer (16) with an excitation signal having a frequency of 1 kHz to 50 kHz in such a way that the transducer oscillates at a constant amplitude.

10. A system according to one of the Claims 1 to 9, **characterized in that** the electric-mechanical transducer (16) is mechanically connected to the mechanical-electric transducer (17) and that a signal or modified signal is applied to the input of the A/D signal converter whenever a motion of rotation acts on the unit.

11. A system according to one of the Claims 1 to 10, **characterized in that** the sensor unit (14) dissolves the range of the signal generated or modified by the motion of rotation to 1/1000^{th} at a signal-to-noise ratio of 1:1.

12. A system according to one of the Claims 1 to 11, **characterized in that** the digital signal-processing unit (13) implements at least one filter function and/or mixing function.

13. A system according to one of the Claims 1 to 12, **characterized in that** the A/D converter (27) provides the signal resulting from the motion of rotation of the unit or the modified signal of the signal processing unit as a digital signal, and that the excitation signal or a feedback signal is multiplied with the signal or modified signal in the signal processing unit.

14. A system according to one of the Claims 1 to 13, **characterized in that** the signal processing unit weights the value obtained with the multiplication according to a digital filter function, e.g. low-pass function.

15. A system according to Claim 14, **characterized in that** the low-pass function filters the frequencies of the excitation signal.

16. A system according to one of the Claims 1 to 15, **characterized in that** the signal processing unit exhibits another filter function to filter resonance frequencies of the digital variable between 50 and 600 Hz.

17. A system according to one of the Claims 1 to 16, **characterized by** being arranged in a motor vehicle.

18. A system according to one of the Claims 1 to 17, **characterized in that** the sensor unit together with the signal processing unit is a yaw rate sensor, which inputs a modified analog signal into the signal processing unit according to a yaw motion, with such signal processing unit delivering digital values for the yaw angle and/or the yaw velocity and/or the yaw acceleration and/or the first derivative of the yaw acceleration by way of the data bus to a further processing unit.

19. A system according to one of the Claims 1 to 18, **characterized in that** additional sensor units, e.g. for detecting acceleration variables, are related to the signal processing unit.

## Revendications

1. Système destiné à influencer le comportement de roulement d'un véhicule automobile, comprenant un module de capteur (14), muni d'un transducteur électromécanique(16) et d'un transducteur mécano-électrique (17) avec un amplificateur de réception des signaux (22), lequel module de capteur, sous l'influence des mouvements de rotation ou des mouvements de lacet du véhicule, fait varier l'énergie électrique fournie de manière analogique par rapport aux mouvements de lacet et est relié par l'intermédiaire d'une sortie à un convertisseur de signaux A/N (27) et par l'intermédiaire d'une entrée à un convertisseur de signaux N/A (28) d'une unité de traitement des signaux (13) numérique, et l'unité de traitement des signaux (13) comporte une sortie numérique avec une interface vers un bus de données (30).

2. Système selon la revendication 1, **caractérisé en ce que** le transducteur électromécanique(16) est exploité en résonance.

3. Système selon la revendication 1 ou 2, **caractérisé en ce que** le module de capteur (14) comporte un amplificateur d'excitation (21) associé au transducteur électrique-mécanique.

4. Système selon une des revendications 1 à 3, **caractérisé en ce que** le domaine de travail du module de capteur (14), à l'étage de la sortie (24), ne dépasse pas 2 volts, de préférence 1 volt.

5. Système selon une des revendications 1 à 4, **caractérisé en ce que** le module de capteur (14) et l'unité de traitement des signaux (13) sont logés chacun dans un boîtier (23, 35) et sont reliés entre eux par au moins trois lignes (10, 11, 12).

6. Système selon une des revendications 1 à 5, **caractérisé en ce que** l'entrée du convertisseur de signaux A/N est reliée par l'intermédiaire d'une ligne de transmission des signaux (10) à l'amplificateur de réception des signaux (22) du transducteur mécano-électrique, et la sortie du convertisseur de signaux N/A est reliée par l'intermédiaire d'une ligne de commande (12) à l'amplificateur d'excitation (21) du transducteur électrique-mécanique, le transducteur électromécanique étant relié par l'intermédiaire d'une ligne de rétroaction (11), de préférence en intercalant un amplificateur de réception des signaux (36), à l'unité de traitement des signaux (13) numérique.

7. Système selon une des revendications 1 à 6, **caractérisé en ce que** l'unité de traitement des signaux (13) comporte un calculateur et une mémoire.

8. Système selon une des revendications 1 à 7, **caractérisé en ce que** l'unité de traitement des signaux est conçue sous forme de microcontrôleur, de processeur de signal numérique (DSP) ou de bloc logique programmable.

9. Système selon une des revendications 1 à 8, **caractérisé en ce que** l'unité de traitement des signaux excite le transducteur électromécanique(16) par un signal d'excitation avec une fréquence de 1 kHz à 50 kHz, de telle sorte que le transducteur oscille avec une amplitude constante.

10. Système selon une des revendications 1 à 9, **caractérisé en ce que** le transducteur électromécanique(16) est assemblé mécaniquement avec le transducteur mécano-électrique (17), et **en ce que**, en présence d'un mouvement de rotation agissant sur l'unité, un signal ou un signal modifié est transmis à l'entrée du convertisseur de signaux A/N.

11. Système selon une des revendications 1 à 10, **caractérisé en ce que** le module de capteur (14) définit le domaine du signal, généré ou modifié par le mouvement de rotation, à un pour mille avec un rapport signal/bruit de fond de 1:1.

12. Système selon une des revendications 1 à 11, **caractérisé en ce que** l'unité de traitement des signaux (13) numérique met en oeuvre au moins une fonction de filtrage et/ou une fonction de mixage.

13. Système selon une des revendications 1 à 12, **caractérisé en ce que** le convertisseur A/N (27) met à disposition, sous forme de signal numérique, le signal résultant du mouvement de rotation de l'unité ou le signal modifié de l'unité de traitement des signaux, et une multiplication du signal d'excitation ou d'un signal de rétroaction avec ledit signal ou signal modifié est effectuée dans l'unité de traitement des signaux.

14. Système selon une des revendications 1 à 13, **caractérisé en ce que** l'unité de traitement des signaux équilibre la valeur résultant de la multiplication, selon une fonction de filtrage numérique, telle que la fonction d'un filtre passe-bas.

15. Système selon la revendication 14, **caractérisé en ce que** la fonction de filtre passe-bas filtre les fréquences du signal d'excitation.

16. Système selon une des revendications 1 à 15, **caractérisé en ce que** l'unité de traitement des signaux, au moyen d'une fonction de filtrage supplémentaire, filtre les fréquences de résonance des valeurs numériques entre 50 et 600 Herz.

17. Système selon une des revendications 1 à 16, **caractérisé par** l'agencement dans un véhicule automobile.

18. Système selon une des revendications 1 à 17, **caractérisé en ce que** le module de capteur avec l'unité de traitement des signaux constitue un capteur de vitesse de lacet qui, en fonction d'un mouvement de lacet, entre un signal analogique modifié dans l'unité de traitement des signaux par laquelle des valeurs numériques pour l'angle de lacet et/ou la vitesse angulaire du lacet et/ou l'accélération angulaire du lacet et/ou la première dérivation de l'accélération angulaire du lacet sont transmises par l'intermédiaire d'un bus de données à une unité de traitement ultérieur.

19. Système selon une des revendications 1 à 18, **caractérisé en ce que** d'autres modules de capteur, tels que ceux pour l'enregistrement de valeurs d'accélération, sont associés à l'unité de traitement des signaux.
